# EUROPÄISCHE PATENTSCHRIFT

(11) **EP 1 955 988 B1**
(45) Veröffentlichungstag und Bekanntmachung des Hinweises auf die Patenterteilung: **22.02.2017**
(21) Anmeldenummer: 07021963.9
(22) Anmeldetag: 13.11.2007
(51) Int. Cl.: C06B 21/00, C06B 45/00, F02K 9/18, F02K 9/24

(54) **VERFAHREN ZUM GIESSEN EINES FESTBRENNSTOFF-TREIBSATZES**
Method for casting a solid fuel propulsion unit
Procédé d'injection d'un bloc porteur de carburant solide

(30) Priorität: 07.02.2007 DE 102007006020
(43) Veröffentlichungstag der Anmeldung: 13.08.2008
(73) Patentinhaber: Bayern-Chemie Gesellschaft für flugchemische Antriebe mbH, 84544 Aschau a. Inn (DE)
(72) Erfinder: Naumann, Karl Wieland Dr., 84454 Mühldorf/Inn (DE)
(74) Vertreter: LS-MP von Puttkamer Berngruber Loth Spuhler

(56) Entgegenhaltungen:
- EP-A- 0 924 423
- GB-A- 892 154
- US-A- 3 090 196
- US-A- 3 421 325
- US-A- 3 492 815
- US-A- 3 745 199
- US-A- 5 385 099
- US-A- 6 148 610

## Beschreibung

Die Erfindung bezieht sich auf ein Verfahren zum Giessen eines als Innenbrenner ausgebildeten Festbrennstoff-Treibsatzes nach dem Oberbegriff des Anspruchs 1.

Um die Oberflächengestaltung von Innenbrenner-Treibsätzen zu beeinflussen, sind verschiedene Methoden bekannt. So können geteilte oder ungeteilte feste Gießkerne verwendet werden, oder feste Gießkerne, die nach dem Aushärten des Treibsatzes in Einzelteile demontierbar sind. Ferner kann eine mechanische Bearbeitung der Treibsätze nach dem Aushärten durchgeführt werden. Auch sind feste Gießkerne mit Bälgen bekannt, die vor dem Beginn des Aushärtens des Treibstoffs bis zum Ende des Aushärtens unter Innendruck gesetzt und in drucklosem, zusammengefallenen Zustand auch aus Hinterschneidungen entfernt werden können. Zudem werden Formteile aus Schaumstoff oder anderen Materialien verwendet, die auf den festen Gießkern vor dem Gießen aufgesetzt werden und nach dem Herausziehen des festen Gießkerns im Treibsatz verbleiben.

Während mit festen Gießkernen keine Hinterschneidungen möglich sind, ist bei festen, in Einzelteilen demontierbaren Gießkernen die aufwändige Herstellung durch die vielen Einzelteile und Schnittstellen, die dadurch auftretenden Spalte bzw. notwendigen Dichtmaßnahmen sowie die umständliche Handhabung nachteilig. Auch sind Hinterschneidungen nur in dem Maße möglich, wie der Treibstoff die die Hinterschneidung bildenden Teile umfließen kann. Zudem wird die Formgebung der Teile durch die Querschnitte der Kanäle beschränkt, durch welche die Teile entfernt werden müssen. Die mechanische Bearbeitung ist nur mit geringer Schnitt- und Vorschubgeschwindigkeit möglich und deshalb langwierig und muss darüber hinaus unter Sicherheit durchgeführt werden. Hinzu kommen bei Motoren mit großen Länge/DurchmesserVerhältnis die schlechte Zugänglichkeit der zu bearbeitenden Positionen sowie die unzureichende Prüfbarkeit. Demzufolge sind mit den gängigen Methoden nur einfache Formen sinnvoll herstellbar.

Bei Gießkernen mit Bälgen sind Hinterschneidungen nur in dem Maße möglich, wie der Treibstoff die die Hinterschneidungen formenden Teile umfließen kann. Falls die Bälge erst nach dem Gießvorgang expandieren sollen, ist ein sehr hoher Druck erforderlich. Auch ist die Formgebung auf Formen beschränkt, die durch Bedrückung erzeugt werden können, also in der Regel einfache Formen. Eine hinreichende Maßhaltigkeit erfordert einen hohen Überdruck in der Aushärtephase des Treibstoffs. Weiterhin müssen die Bälge sicher abgedichtet sein, um austretende Gase und damit die Bildung von Lunkern bzw. bei Flüssigkeiten als Druckmedium eine Schädigung des Treibstoffs durch austretende Flüssigkeit zu verhindern. Schließlich werden Hinterschneidungen, die durch Formteile aus Schaumstoff oder anderen Materialien gebildet werden, dadurch begrenzt, dass nur Formteile eingesetzt werden können, die von der Treibstoffmasse umflossen werden können GB892154 offenbart einen Festbrennstoff-Treibsatz, welcher radiale Spalten und eine kreisförmige Begrenzungsplatte aus Zelluloseacetat beinhaltet. Die Gussform für den Treibsatz wird bevorzugt aus Zelluloseacetat hergestellt, an welches das Treibmittel beim Aushärten fest gebunden wird. Alternativ kann auch eine Gussform verwendet werden, mit welcher das Treibmittel keine Bindung ausbildet (z.B. Aluminium oder Edelstahl).

Aufgabe der Erfindung ist es daher, ein einfaches zuverlässiges Verfahren bereitzustellen, mit dem Festbrennstofftreibsätze mit Hinterschneidungen großer Tiefe gegossen werden können.

Dies wird erfindungsgemäß mit dem in Anspruch 1 gekennzeichneten Verfahren erreicht. D. h. erfindungsgemäß werden vor dem Gießen an dem Gießkern oder der Brennkammerwand ringförmige Formteile befestigt, die mit Durchlassöffnungen zum Durchtritt des viskosen Treibstoffs versehen sind und in dem Treibsatz nach Entfernen des Gießkerns verbleiben. Beim Abbrand des Treibsatzes verbrennen oder zersetzen sich die Formteile.

Die aus dem ausgehärteten Treibsatz beim Abbrand durch Verbrennung oder Zersetzung bestehen z. B. aus einem Kunststoff oder aus einem anderen Material, das durch die hohe Temperatur beim Abbrand des Treibsatzes schmilzt, verbrennt und/oder sich zersetzt. Vorzugsweise werden jedoch Formteile aus Kunststoff-Schaumstoff verwendet, da diese durch den Druck beim Abbrand des Treibsatzes zusammengedrückt und durch die Abgase verbrannt oder zersetzt werden.

Als Treibstoffe werden insbesondere Composit-Treibstoffe verwendet, die einen hohen Anteil an Feststoffen haben und damit eine hochviskose Konsistenz besitzen. Wenn man einen geschlossenen ringförmigen Formkörper verwendet, der an dem Gießkern befestigt ist, müsste daher ein breiter Spalt zwischen Formkörper und Brennkammerwand vorgesehen sein, damit die plastische Treibstoffmasse hindurchtreten kann.

Wenn der Treibsatz nach dem Gießen und Aushärten abgekühlt wird, treten aufgrund der unterschiedlichen Wäremausdehnungskoeffizienten des Treibsatzes bzw. der Brennkammerwand in dem an die Brennkammerwand gebundenen Treibsatz Spannungen auf, die zu Rissen führen können. Diese Spannungen nehmen mit der Länge des Treibsatzes zu, desgleichen mit der relativen Schichtdicke des vorzugsweise zylindrischen Treibsatzes, insbesondere zwischen Hinterschneidung und Brennkammerwand. Durch den relativ breiten Spalt, der bei einem geschlossenen ringförmigen Formteil zum Durchtritt der Treibstoffmasse notwendig ist, treten also entsprechend große Spannungen im Treibsatz auf, so dass die Gefahr einer Rissbildung besteht.

Erfindungsgemäß werden daher in dem ringförmigen Formteil Durchlassöffnungen vorgesehen, durch die die hochviskose Treibstoffmasse hindurchtreten kann. Dabei wird die Zahl und Größe der Durchlassöffnungen hinreichend groß gewählt.

Zugleich wird vorzugsweise ein Formteil verwendet, das sich ganz oder zumindest nahe, also wenigstens über 4/5 des Abstands zwischen Gießkern und Brennerkammerwand erstreckt. Damit kann eine Rissbildung durch Spannungen in den Treibsatzblöcken verhindert werden. Denn zum einen wird der Treibsatz der Länge nach segmentiert, und zwar bei sich bis zur Trennkammerwand erstreckenden Gießkernen völlig. Zum anderen ist die Schichtdicke des an die Brennkammerwand gebundenen Treibsatzes im Bereich der Formkörper null, jedenfalls gering, so dass auch Spannungen aufgrund der Schichtdicke des Treibsatzes unterbunden sind. Risse, die sich in den Durchlässen befindlichen Treibstoffstegen bilden, sind dabei ohne Einfluss auf die Sicherheit des Treibsatzes, weil diese dort auftreten, wo auch bei einem geschlossenen Formkörper Abbrandoberflächen auftreten würden.

Die Formteile mit den Durchlassöffnungen können erfindungsgemäß am Gießkern, an der Brennkammerwand oder am Gießkern und der Brennkammerwand befestigt werden. Da der Gießkern aus den Formteilen nach dem Aushärten des Treibsatzes herausgezogen werden muss, sind die Formteile am Gießkern jedoch lösbar zu befestigen.

Nachstehend ist die Erfindung anhand der beigefügten Zeichnung beispielhaft näher erläutert. Darin zeigen jeweils schematisch:
Figur 1 einen Längsschnitt durch einen Treibsatz, der mit einem Gießkern mit Formteilen gegossen wird, die nicht mit den erfindungsgemäßen Durchlassöffnungen versehen sind;
Figur 2 einen Längsschnitt durch einen Treibsatz nach einer ersten Ausführungsform der Erfindung;
Figur 3 einen Querschnitt durch den Treibsatz entlang der Linie III-III in Figur 2;
Figur 4 einen Längsschnitt durch einen Treibsatz nach einer zweiten Ausführungsform der Erfindung;
Figur 5 a und 5 b im Längsschnitt und in vergrößerter Wiedergabe einen Teil eines Treibsatzes, der mit einem Formteil mit einer inhibierenden bzw. enthaftenden Beschichtung gegossen worden ist;
Figur 6 einen Längsschnitt durch einen Treibsatz nach einer dritten Ausführungsform, bei der die Formteile an der Brennkammerwand befestigt sind;
Figur 7 einen Längsschnitt durch einen Treibsatz nach einer vierten Ausführungsform;
Figur 8 einen Längsschnitt durch einen Treibsatz nach einer fünften Ausführungsform;
Figur 9 einen Längsschnitt durch einen Treibsatz nach einer sechsten Ausführungsform;
Figur 10 einen Querschnitt durch die Vertiefung entlang der Linie X-X in Figur 9; und
Figur 11 einen Längsschnitt durch einen Treibsatz nach einer siebten Ausführungsform.

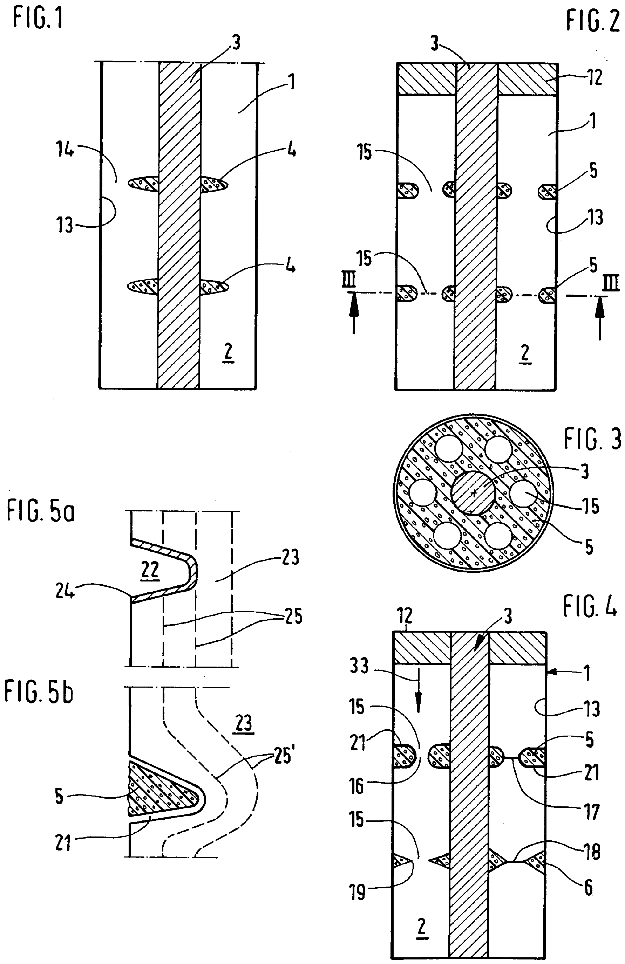

Wie aus der Zeichnung ersichtlich, wird zur Herstellung eines als Innenbrenner ausgebildeten Feststoffraketen-Treibsatzes in die Brennkammer 1 eine Treibstoffmasse 2 gegossen. Dabei erstreckt sich koaxial zur Brennkammerlängsachse ein stabförmiger Gießkern 3, an dem Formteile 4 bis 6 und 8 bis 11 z. B. aus Kunststoffschaumstoff befestigt sind (Figur 1 bis 4 und 7 bis 11).

Die in die Brennkammer 1 gegossenen plastische Treibstoffmasse 2 wird mit einem Verdränger 12 verdichtet. Anschließend wird die Treibstoffmasse 2 ausgehärtet, so dass der an die Brennkammerwand 3 gebundene Treibsatz gebildet wird, aus dem dann der Gießkern 3 durch Herausziehen entfernt wird, während die Formteile 4 bis 11 aus Kunststoffschaumstoff in dem Treibsatz verbleiben.

Wie aus Figur 1 ersichtlich, muss bei geschlossenen ringförmigen Formteilen 4 ein relativ großer Spalt 14 zwischen den Formteilen 4 und der Brennkammerwand 13 vorgesehen sein, durch den die hochviskose Treibstoffmasse 2 beim Gießen hindurchtreten kann.

Beim Abkühlen des ausgehärteten Treibsatzes treten aufgrund der unterschiedlichen Wärmeausdehnungskoeffizienten der Brennkammerwand 13 einerseits und des an die Brennkammerwand 13 gebundenen Treibsatzes andererseits Spannungen auf, die zu Rissen führen können. Da sich der Treibsatz über die gesamte Länge der Brennkammerwand 13 erstreckt und durch die Formteile 4 in dem Treibsatz Kerben gebildet werden, ist bei Verwendung von Formteilen gemäß Figur 1 mit Rissbildung im Treibsatz zu rechnen.

Wie in Figur 2 bis 4 und 6 bis 11 dargestellt, werden demgegenüber nach der Erfindung Formteile 5 bis 11 verwendet, die Durchlassöffnungen 15 aufweisen, durch die die Treibstoffmasse 2 beim Gießen und Verdichten hindurchfließen kann.

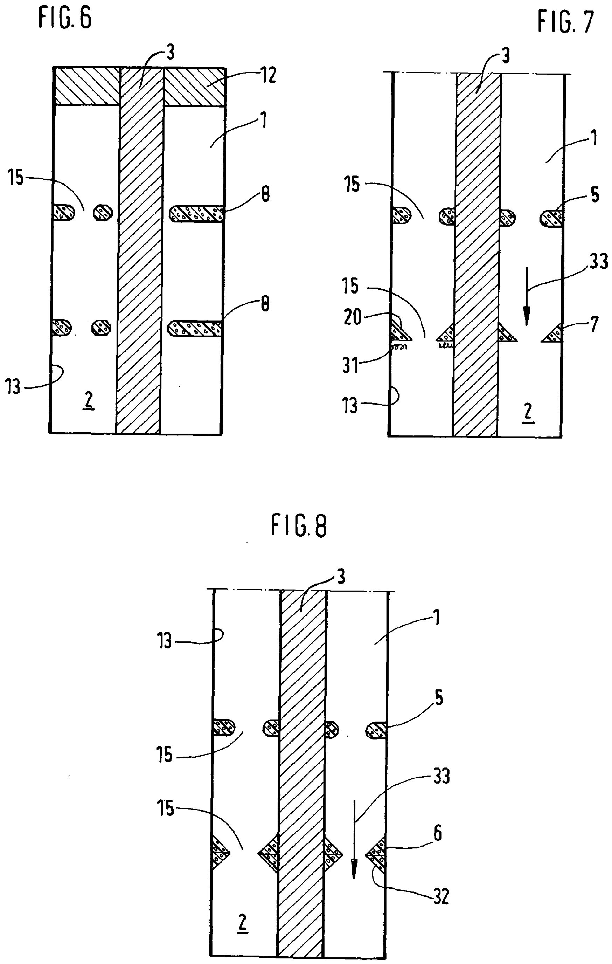

Die Formteile 5 bis 11 mit den Durchlassöffnungen 15 können dabei entsprechend Figur 2 bis 4 und Figur 7 bis 11 an dem Gießkern 3 oder gemäß Figur 6 an der Brennkammerwand 13 befestigt sein.

Da sich die Formteile 5 bis 7 sowie 9 bis 11, die an dem Gießkern 3 befestigt sind, bis zur Brennkammerwand 13 erstrecken, werden mit diesen Formteilen bis zur Brennkammerwand 13 erstreckende Hinterschneidungen in dem Treibsatz gebildet.

Die Hinterschneidungen dienen einerseits zur Spannungsentlastung beim Abkühlen des Treibsatzes und andererseits zur Gestaltung der Abbrandoberfläche.

Falls die Hinterschneidungen zur Spannungsentlastung dienen, werden sie vorteilhaft bis zur Brennkammerinnenwand 13 oder bis nahe an diese heran ausgeführt. Damit wird der Treibsatz seiner Länge nach segmentiert.

In den Durchlassöffnungen 15 werden fertigungsbedingt Treibstoffstege 16 gebildet (Figur 2), die Sollbruchstellen bilden, also bei starken Zugspannungen reißen, weil hier die Spannungsspitzen liegen.

In Figur 4 ist für das obere Formteil 5 ein solcher natürlicher Riss 17 dargestellt. Die Rissbildung kann durch Formgebung der Stegquerschnitte beeinflusst werden. So wird ein reproduzierbarer gerader Riss 18 gebildet, wenn gemäß dem unteren Formteil 6 in Figur 4 die Kanten 19 der Durchlassöffnungen 15 des Formteils spitzwinklig ausgebildet sind, um spitzwinklige Kerben mit Treibsatz in der Durchlassöffnung 15 zu bilden.

Die Formteile 5 bis 11 können mit einer Schicht 21 versehen sein, wie in Figur 4 für das obere Formteil 5 dargestellt.

Falls durch die Formteile 5 bis 11 lediglich eine Hinterschneidung zur Spannungsentlastung gebildet werden soll, kann die Schicht 21 aus einem abbrandinhibierenden Material bestehen, wodurch gemäß Figur 5 a nach dem Verbrennen der Formteiles 5 die Hinterschneidung 22 in dem Treibsatz 23 mit einer inhibierenden Schicht 24 versehen ist. Wie durch die geraden Isobrandfortschrittslinien 25 in Figur 5 a dargestellt, bleibt damit die Abbrandoberfläche durch die Hinterschneidungen 22 weitgehend unbeeinträchtigt.

Falls die Hinterschneidungen durch die Formteile 5 bis 11 hingegen zur Gestaltung der Abbrandoberfläche dienen sollen, beeinflussen die in den Durchlassöffnungen 15 gebildeten Treibstoffstege 16 die Abbrandoberflächenhistorie des Treibsatzes in der Regel nur marginal, da die Stege 16 beim Abbrand sofort entfernt werden.

Dabei hat es sich als vorteilhaft erwiesen, die Schicht 21 auf dem Formteil 5 aus einem enthaftenden Material, beispielsweise Silikon, zu bilden, um durch die Hinterschneidung 7 die Brennfläche zu vergrößern, wie dies in Figur 5 b durch die Isoabbrandfortschrittslinien 25' dargestellt ist. Auch kann die Schicht 21 die Formteile 5 bis 11 nur teilweise bedecken. Ferner sind Kombinationen von inhibierender und enthaftender Beschichtung möglich.

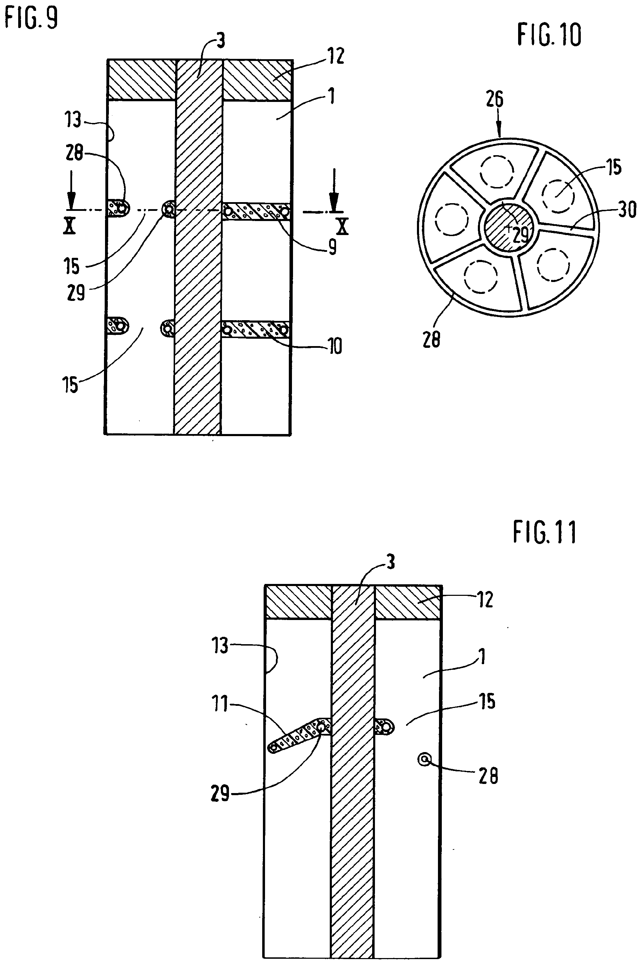

Durch die Versteifung 26 der Formteile 9 und 11 gemäß Figur 9 bis 11 wird verhindert, dass die Treibstoffmasse 2 aufgrund ihrer hohen Dichte und Viskosität zu Verformungen der Schaumstoffformteile 5 bis 11 führt. Die Versteifung 26 kann beispielsweise aus einem Faser- insbesondere kohlefaserverstärkten Kunststoff bestehen. Gemäß Figur 10 weist die Versteifung 26 einen Außenring 28 und einen Innenring 29 auf, zwischen denen sich zwischen den Durchlassöffnungen 15 radiale Stege 30 erstrecken.

Bemerkt sei, dass die Versteifungen 26 auch anders ausgebildet sein können. So kann z.B. nur der Außenring 28 oder nur der Innenring 29 vorgesehen sein, an dem die Stege 30 befestigt sind.

Da die Stege 30 und der Innenring 29 an dem Außenring 28 befestigt sind, der in dem Bereich des Treibsatzes eingebettet ist, der zuletzt vom Abbrand erfasst wird, stellt der Außenring 27 das massivste und sich zuletzt auflösende Teil der Verstärkung 26 dar. Damit wird der Gefahr, dass die Versteifung 26 bei zunehmenden Abbrand des Treibsatzes als Ganzes oder in Teilen durch das Gasleitrohr oder die Düse hindurchtritt und Beschädigungen oder Druckschwankungen verursacht, begegnet.

Wie durch das untere Formteil 8 in Figur 7 dargestellt, können sich die Kanten 20 der Durchlassöffnungen 15 in Gießrichtung 33 trichterförmig verjüngen, damit die Treibstoffmasse 2 möglichst leicht durch die Durchlassöffnungen 15 fließt.

Wenn die Treibstoffmasse 2 durch die Durchlassöffnungen 15 fließt, können sich aufgrund ihrer hochviskosen Konsistenz an der der Fließrichtung abgewandten Seite der Formteile 5 Lunker bilden, wie in Figur 7 schematisch durch "31" veranschaulicht. Um eine Lunkerbildung zu verhindern, ist es daher vorteilhaft, gemäß Figur 8 Formteile 6 zu verwenden, bei denen sich die Kanten 32 der Durchlassöffnungen 15 in Gießrichtung 33 trichterförmig erweitern.

Um Hinterschneidungen zu bilden, die in Abgasströmungsrichtung geneigt sind, wodurch die Verwirbelung des Abgasstroms durch die Hinterschneidungen reduziert werden kann, kann gemäß Figur 11 das Formteil 11 schiefwinklig zur Brennkammerlängsachse angeordnet sein.

## Patentansprüche

1. Verfahren zum Gießen eines an die Brennkammerwand (13) gebundenen, als Innenbrenner ausgebildeten Festbrennstoff-Treibsatzes, bei dem ein Gießkern (3) in der Längsachse der Brennkammer (1) angeordnet, die plastische Brennstoffmasse (2) in die Brennkammer (1) gegossen und verdichtet und der Gießkern (3) nach dem Aushärten des Treibsatzes entfernt wird, **dadurch gekennzeichnet, dass** vor dem Gießen an dem Gießkern (3) und/oder der Brennkammerwand (13) Formteile (5 bis 11) befestigt werden, die mit Durchlassöffnungen (15) zum Durchtritt der Treibstoffmasse (2) beim Gießen und Verdichten versehen sind, in dem Treibsatz nach Entfernen des Gießkernes (3) verbleiben und aus einem beim Abbrand des Treibsatzes verbrennenden oder sich zersetzenden Material bestehen.

2. Verfahren nach Anspruch 1, **dadurch gekennzeichnet, dass** die beim Abbrand des Treibsatzes verbrennenden oder sich zersetzenden Formteile (5 bis 11) aus Kunststoffschaumstoff bestehen.

3. Verfahren nach Anspruch 1 oder 2, **dadurch gekennzeichnet, dass** die Formteile (5 bis 7, 9 bis 11) am Gießkern (3) befestigt sind und sich wenigstens über 4/5 des Abstandes zwischen Gießkern (3) und Brennkammerwand (13) erstrecken.

4. Verfahren nach Anspruch 3, **dadurch gekennzeichnet, dass** sich die Formteile (5, 6, 8 bis 11) vom Gießkern (3) bis an die Brennkammerwand (13) erstrecken.

5. Verfahren nach einem der vorstehenden Ansprüche, **dadurch gekennzeichnet, dass** die Kanten (19) der Durchlassöffnungen (15) spitzwinklig ausgebildet sind.

6. Verfahren nach einem der vorstehenden Ansprüche, **dadurch gekennzeichnet, dass** die Formteile (5 bis 11) zumindest teilweise mit einer abbrandinhibierenden Beschichtung (24) versehen sind.

7. Verfahren nach einem der vorstehenden Ansprüche, **dadurch gekennzeichnet, dass** die Formteile (5 bis 11) zumindest teilweise mit einer enthaftenden Beschichtung (21) versehen sind.

8. Verfahren nach einem der vorstehenden Ansprüche, **dadurch gekennzeichnet, dass** die Formteile mit Versteifungen (26) versehen sind.

9. Verfahren nach Anspruch 8, **dadurch gekennzeichnet, dass** die Versteifungen (26) durch sich zwischen den Durchlassöffnungen (15) erstreckende radiale Versteifungsstege (30) gebildet sind.

10. Verfahren nach Anspruch 9, **dadurch gekennzeichnet, dass** die Versteifungsstege (30) an einem an der Brennkammerwand (13) angeordneten Außenring (28) befestigt sind.

11. Verfahren nach einem der vorstehenden Ansprüche, **dadurch gekennzeichnet, dass** die Kanten (20) der Durchlassöffnungen (15) sich in Gießrichtung (33) trichterförmig verjüngen.

12. Verfahren nach einem der vorstehenden Ansprüche, **dadurch gekennzeichnet, dass** sich die Kanten (32) der Durchlassöffnungen (15) in Gießrichtung (33) erweitern.

13. Verfahren nach einem der vorstehenden Ansprüche, **dadurch gekennzeichnet, dass** die Formteile (11) schiefwinklig zur Brennkammerlängsachse angeordnet sind.

## Claims

1. Method for casting a solid propellant charge which is fixed to the combustion chamber wall (13) and configured in the form of an internal burner, wherein a casting core (3) is arranged in the longitudinal axis of the combustion chamber (1), the plastic propellant mass (2) is cast into the combustion chamber (1) and compressed, and the casting core (3) is removed after curing of the propellant charge, **characterized in that** before casting, shaped parts (5 to 11) are attached to the casting core (3) and/or the combustion chamber wall (13) which are provided with outlet openings (15) for the passage of the propellant mass (2) during casting and compressing, which remain in the propellant charge after removal of the casting core (3) and which are made of a material combusting or decomposing when the propellant charge is combusted.

2. Method according to claim 1, **characterized in that** the shaped parts (5 to 11) combusting or decomposing when the propellant charge is combusted are made of plastic foam.

3. Method according to claim 1 or 2, **characterized in that** the shaped parts (5 to 7, 9 to 11) are attached to the casting core (3) and extend at least across four quarters of the distance between the casting core (3) and the combustion chamber wall (13).

4. Method according to claim 3, **characterized in that** the shaped parts (5, 6, 8 to 11) extend from the casting core (3) to the combustion chamber wall (13).

5. Method according to any of the preceding claims, **characterized in that** the edges (19) of the outlet openings (15) are configured in the form of an acute angle.

6. Method according to any of the preceding claims, **characterized in that** the shaped parts (5 to 11) are at least partially provided with a coating (24) inhibiting combustion.

7. Method according to any of the preceding claims, **characterized in that** the shaped parts (5 to 11) are at least partially provided with a tack-free coating (21).

8. Method according to any of the preceding claims, **characterized in that** the shaped parts are provided with stiffeners (26).

9. Method according to claim 8, **characterized in that** the stiffeners (26) are formed by means of radial stiffening webs (30) extending between the outlet openings (15).

10. Method according to claim 9, **characterized in that** the stiffening webs (30) are attached to an outer ring (28) arranged on the combustion chamber wall (13).

11. Method according to any of the preceding claims, **characterized in that** the edges (20) of the outlet openings (15) taper in a funnel-shaped manner in the casting direction (33).

12. Method according to any of the preceding claims, **characterized in that** the edges (32) of the outlet openings (15) enlarge in the casting direction (33).

13. Method according to any of the preceding claims, **characterized in that** the shaped parts (11) are arranged in an oblique-angled manner in relation to the longitudinal axis of the combustion chamber.

## Revendications

1. Procédé de couler d'une charge propulsive de combustible solide réalisé sous forme de brûleur interne et relié à la paroi de chambre de combustion (13), dans lequel un noyau de fonderie (3) est agencé dans l'axe longitudinal de la chambre de combustion (1), la masse de carburant (2) plastique est coulée dans la chambre de combustion (1) et comprimée, et le noyau de fonderie (3) est enlevé après le durcissement de la charge propulsive, **caractérisé en ce qu'**avant la coulée, des pièces moulées (5 à 11) sont fixées sur le noyau de fonderie (3) et/ou sur la paroi de chambre de combustion (13), lesquelles sont pourvues d'orifices de passage (15) pour le passage de la masse de carburant (2) lors de la coulée et de la compression, restent dans la charge propulsive après avoir enlevé le noyau de fonderie (3) et sont constituées par un matériau qui brûle ou se décompose lors de la combustion de la charge propulsive.

2. Procédé selon la revendication 1, **caractérisé en ce que** les pièces moulées (5 à 11) qui brûlent ou se décomposent lors de la combustion de la charge propulsive sont en mousse de matière plastique.

3. Procédé selon la revendication 1 ou 2, **caractérisé en ce que** les pièces moulées (5 à 7, 9 à 11) sont fixées sur le noyau de fonderie (3) et s'étendent au moins sur quatre cinquièmes de la distance entre le noyau de fonderie (3) et la paroi de chambre de combustion (13).

4. Procédé selon la revendication 3, **caractérisé en ce que** les pièces moulées (5, 6, 8 à 11) s'étendent depuis le noyau de fonderie (3) jusqu'à la paroi de chambre de combustion (13).

5. Procédé selon l'une des revendications précédentes, **caractérisé en ce que** les arêtes (19) des orifices de passage (15) sont réalisées en angle aigu.

6. Procédé selon l'une des revendications précédentes, **caractérisé en ce que** les pièces moulées (5 à 11) sont pourvues au moins partiellement d'une couche inhibitrices de combustion (24).

7. Procédé selon l'une des revendications précédentes, **caractérisé en ce que** les pièces moulées (5 à 11) sont pourvues au moins partiellement d'une couche anti-adhérente (21).

8. Procédé selon l'une des revendications précédentes, **caractérisé en ce que** les pièces moulées sont pourvues de raidisseurs (26).

9. Procédé selon la revendication 8, **caractérisé en ce que** les raidisseurs (26) sont formés par des entretoises de raidissement (30) radiales s'étendant entre les orifices de passage (15).

10. Procédé selon la revendication 9, **caractérisé en ce que** les entretoises de raidissement (30) sont fixées sur une bague extérieure (28) agencée sur la paroi de chambre de combustion (13).

11. Procédé selon l'une des revendications précédentes, **caractérisé en ce que** les arêtes (20) des orifices de passage (15) se rétrécissent en forme d'entonnoir en direction de coulée (33).

12. Procédé selon l'une des revendications précédentes, **caractérisé en ce que** les arêtes (32) des orifices de passage (15) s'élargissent en direction de coulée (33).

13. Procédé selon l'une des revendications précédentes, **caractérisé en ce que** les pièces moulées (11) sont agencées en oblique par rapport à l'axe longitudinale de chambre de combustion.
